# EUROPEAN PATENT SPECIFICATION

(11) **EP 4 402 659 B1**
(45) Date of publication and mention of the grant of the patent: **28.10.2026**
(21) Application number: 22793903.0
(22) Date of filing: 13.09.2022
(51) Int. Cl.: H04L 65/1069, H04L 65/75, H04L 65/80, G07C 5/00

(54) **VEHICLE DATA ACCESS**
FAHRZEUGDATENZUGRIFF
ACCÈS À DES DONNÉES DE VÉHICULE

(30) Priority: 15.09.2021 US 202163244657 P
(43) Date of publication of application: 24.07.2024
(73) Proprietor: Tesla, Inc., Austin, TX 78725 (US)
(72) Inventor: GUGLE, Karan, Austin, Texas 78725 (US); EBIDIA, David, Austin, Texas 78725 (US); BOULANGER LATOUR, David, Austin, Texas 78725 (US); KESSLER, Michael, Austin, Texas 78725 (US); MCGUIRE, Rory, Austin, Texas 78725 (US)
(74) Representative: Liesegang, Eva
(86) International application number: PCT/US2022/043380
(87) International publication number: WO 2023/043745

(56) References cited:
- CN-A- 106 686 000
- US-A1- 2009 028 186
- US-A1- 2020 412 811
- US-A1- 2021 192 867
- US-B2- 9 503 968

## Description

### BACKGROUND

Generally described, computing devices and communication networks can be utilized to exchange data and/or information. In a common application, a computing device can request content from another computing device via the communication network. For example, a user at a personal computing device can utilize a browser application to request a content page (e.g., a network page, a Web page, etc.) from a server computing device via the network (e.g., the Internet). In such embodiments, the user computing device can be referred to as a client computing device, and the server computing device can be referred to as a content provider. In another embodiment, the user computing device can collect or generate information and provide the collected information to a server computing device for further processing or analysis.

Generally described, a variety of vehicles, such as electric vehicles, combustion engine vehicles, hybrid vehicles, etc., can be configured with user-specific information or configuration information to facilitate operation. In certain scenarios, a user may wish to access vehicle data, such as operation parameters, sensor values, or other information associated with a vehicle, to monitor or calculate vehicle performance characteristics on a substantially real-time basis. Typically, vehicle data access can be limited by the network performance, such as the network bandwidth, or by predefined rules in accessing the vehicle data, such as predefined bi-directional data communication protocol.

US 9,503,968 B2 describes vehicle Communications using IEEE.WAVE functionality whereby a smart phone (SP) linked to an On Board Unit (OBU) having WAVE functionality, and incorporating Automotive Telemetry Protocol (ATP), has at least one processor to configure the SP as a GUI for the OBU, and to enable WAVE authentication of the SP through a networked Road Side Unit. Preferably, the OBU opens, after a command from an ATP Client, a virtual connection for streaming data between the vehicle data bus and a remote server providing an automotive scan tool. Also preferably, the SP may use either cellular or IEEE.control signals to trialaterate its geographic position with greater accuracy than GPS, and to hand off the geo-position fixes to the OBU. Accumulated geo-location information may be reported to a remote server, providing a centralized geographic trend analysis of plural SPs operating with OBUs.

US 2009/028186 A1 discloses an apparatus for bandwidth reservation for data flows in interconnection networks. Some embodiments of an apparatus for transmitting a data stream include a transmitter to transmit a data stream to a recipient apparatus, the data stream including a plurality of data packets. The apparatus further includes a receiver to receive a response from the recipient apparatus regarding data packet arrival status, and a network unit to direct the operation of the transmitter, the network unit to direct the transmitter to maintain the data stream with a constant bandwidth.
Further prior art is known from US 2021/192867 A1 and US 2020/412811 A1.

### BRIEF DESCRIPTION OF THE DRAWINGS

This disclosure is described herein with reference to drawings of certain embodiments, which are intended to illustrate, but not to limit, the present disclosure. It is to be understood that the accompanying drawings, which are incorporated in and constitute a part of this specification, are for the purpose of illustrating concepts disclosed herein and may not be to scale.
FIG. 1 depicts a block diagram of an illustrative environment for providing a vehicle data communication access in accordance with one or more aspects of the present application.
FIG. 2 illustrates an environment that corresponds to vehicles in accordance with one or more aspects of the present application.
FIG. 3A depicts an illustrative architecture for implementing a vehicle data access service in accordance with aspects of the present application.
FIG. 3B depicts an illustrative architecture for implementing a vehicle data processing component in accordance with aspects of the present application.
FIG. 4 is a block diagram of the illustrative environment of FIG. 1.
FIG. 5 is a flow chart describing a vehicle data request generation routine for accessing vehicle data according to one or more embodiments.
FIG. 6 is a flow chart describing a vehicle data request process routine for processing a vehicle data request according to one or more embodiments.

### DETAILED DESCRIPTION

Generally described, one or more aspects of the present disclosure relate to the configuration and management of data provided by vehicles. By way of illustrative example, aspects of the present application correspond to management of data communications to provide dynamically defined vehicle data. Illustratively, vehicle data can include, but is not limited, vehicle operational information, vehicle parameters, sensor configuration information, sensor values, environmental information, and the like.

In accordance with an illustrative embodiments, one or more aspects of the present disclosure related to the accessibility of vehicle data communications provided to an authenticated and authorized user, such as a service technician or other third party. Illustratively, a network service provider facilitates the interaction between the vehicle owner/user and the third party accessing the respective vehicle data. The network service provider can facilitate an initial authorization for access to vehicle data, provide access to the vehicle data for authenticated and authorized users, and manage the revocation of vehicle data access rights.

In some embodiments, the vehicle data or information provided by the components can include processed information in which a controller, logic unit, processor, and the like has processed sensor information and generated additional information, such as a vision system that can utilize inputs from one or more camera sensors and provide outputs corresponding to identification of environmental conditions that promote accumulation of objects/obstructions on the fascia (e.g., a processing of raw camera image data and the generation of outputs corresponding to the processing of the raw camera image information). The camera sensor may be the sensor component associated with the heater element. In other embodiments, the camera sensors can be separate from the sensor components, such as for non-camera sensor components or vehicles having multiple camera sensors. In still another example, a control component can utilize additional information obtained from, or otherwise associated with, positioning systems, calendaring systems, or time-based systems. In still a further example, the historical information can be incorporated as a separate information source to the control component or be utilized to process at least some portion of the set of information sources, such as detected vehicle speed, external temperature measurements, and operational status of the windshield wiper, vision system (e.g., camera inputs), location systems (e.g., GPS systems), timing information, the operational status of the radar components, etc. In some embodiments, the information provided by the components can include high resolution or low resolution or a combination of high and low resolution image and/or video streaming data.

Generally described, traditional approaches to data access to vehicle information has generally been limited to applications in which vehicle data can only be continuously provided according to reduced quality/low bandwidth transmissions, such as simple remote diagnostic data or downsampled sensor information. In other applications, a remote service may be limited to access vehicle data based on a predetermined format and protocol for accessing data. For example, a vehicle may be configured to collect and provide data according to a set of predefined, structured messages or message types. In another example, the vehicle data may need to be further processed to access a portion of data requested by a user. In this example, this data process can cause latency in accessing the vehicle data by a user. Further, in another example, the vehicle data may need to be downsampled to be accessed by the user due to limited network bandwidth. Such approaches are deficient in limiting the types of data collected or otherwise limiting the quality of data that may be provided by the vehicle responsive to the request.

To address at least a portion of the above-identified inefficiencies, a network service provider can facilitate the transmission of data communications between a selected vehicle and remote service to facilitate the transmission of dynamically requested vehicle information. A vehicle can include network communications functionality that can establish bi-directional communications with the network service provider. A gateway component within the vehicle includes processing functionality to receive data communication requests from the network service providers. Illustratively, the data communications request can specify a request for vehicle data as defined in the request and is not limited to any predefined categories of communications that define size, format or type of data that can be returned. Accordingly, aspects of the present application relate to the functionality for the gateway to facilitate responsive, full resolution data transmissions between a vehicle and network service provider. The network service provider can further monitor and update communication frequency to the vehicle based on available bandwidth and network quality parameters. For example, the network service provider can meter data requests for high bandwidth data when the communication network conditions do not meet or exceed performance thresholds.

Although the various aspects will be described in accordance with illustrative embodiments and a combination of features, one skilled in the relevant art will appreciate that the examples and combination of features are illustrative in nature and should not be construed as limiting. More specifically, aspects of the present application may be applicable with various types of vehicle data or vehicle processes. However, one skilled in the relevant art will appreciate that the aspects of the present application are not necessarily limited to application to any particular type of vehicle data, data communications or illustrative interaction between third parties, user (e.g., driver), a network system administrator, and a network service provider. Further, to facilitate the exchange of vehicle data and to provide for selected customization of data transmissions in an efficient manner, one or more aspects of the present application further correspond to illustrative data structure/organization in which vehicle information is transmitted in accordance with illustrative communication protocols. Such interactions should not be construed as limiting.

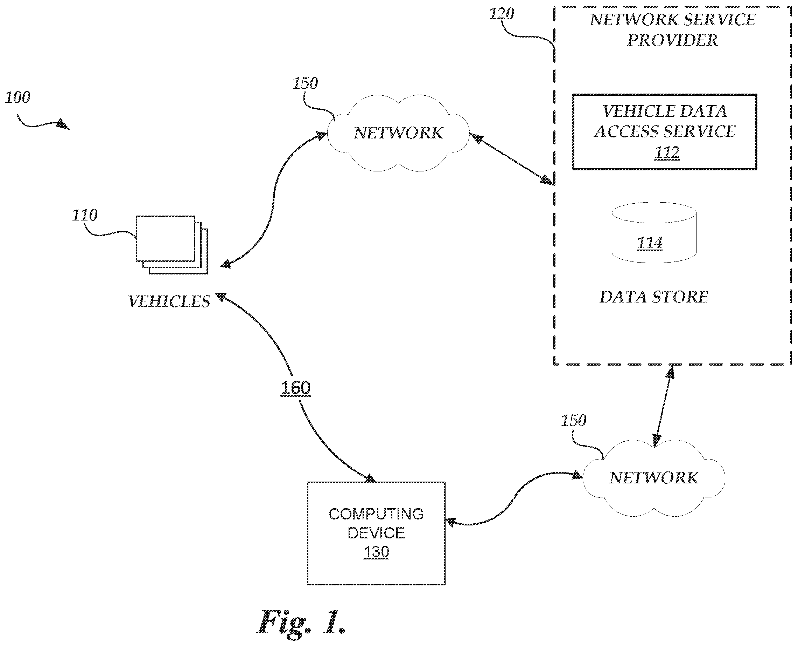

FIG. 1 depicts a block diagram of an illustrative environment 100 for providing vehicle data communication access in accordance with one or more aspects of the present application. The environment 100 can comprise a network, the network connecting a set of vehicles 110, a network service provider 120, and one or more computing devices 130. The components may correspond to software modules implemented or executed by one or more external computing devices, which may be separate stand-alone external computing devices. Accordingly, the components of the network service provider 120 should be considered as a logical representation of the service, not requiring any specific implementation on one or more external computing devices.

The computing device 130, as depicted in FIG. 1, can be any computing device such as a desktop, laptop, personal computer, tablet computer, wearable computer, server, personal digital assistant (PDA), hybrid PDA/mobile phone, mobile phone, smartphone, set-top box, voice command device, digital media player, and the like. The computing device 130 may execute an application (e.g., a browser, a stand-alone application, etc.) that allows a user to access interactive user interfaces, view images, analyses, aggregated data, and/or the like as described herein. By way of the illustrative embodiment, the computing device 130 corresponds to a computing device that is utilized by a user who needs access to at least a portion of the vehicle data. For example, the user may include but is not limited to an administrator, a developer, a service technician, a vehicle driver, etc. As will be described, the user by utilizing the computing device 130 can request access to a portion of vehicle data as described herein. In some embodiments, the computing device 130 can be implemented to the vehicle 110 as a functionality of the vehicle 110. For example, the vehicle 110 may perform the functions implemented in the computing device 130 by utilizing the vehicle's resources, such as the vehicle's processors and memory.

Network 150, as depicted in FIG. 1, connects the vehicles 110, computing devices 130, and network service provider 120. The network 150 can connect any number of devices. In some embodiments, the network service provider 120 provides network-based services to computing devices via a network. A network service provider implements network-based services and refers to a large, shared pool of network-accessible computing resources (such as compute, storage, or networking resources, applications, or services), which may be virtualized or bare-metal. The network service provider can provide on-demand network access to a shared pool of configurable computing resources that can be programmatically provisioned and released in response to user commands. These resources can be dynamically provisioned and reconfigured to adjust to the variable load. The concept of "cloud computing" or "network-based computing" can thus be considered as both the applications delivered as services over the network and the hardware and software in the network service provider that provide those services.

A network 160 can comprise any combination of wired and/or wireless networks, such as one or more direct communication channels, local area network, wide area network, personal area network, and/or the Internet, for example. In some embodiments, communication between the vehicle 110 and the computing device 130 may be performed via a short-range communication protocol, such as Bluetooth, Bluetooth low energy ("BLE"), and/or near field communications ("NFC"). Communication between the vehicle 110 and the network service provider 120 can occur via network 150, such as via one or more secured networks, such as a local area network that communicates securely via the Internet with the network service provider 120. However, networks 150, 160 may include some or all of the same communication protocols, services, hardware, etc. Thus, although the discussion herein may describe communication between the vehicle 110 and the computing device 130 via the network 160 and communication between the vehicle 110 and the network service provider 120 via the network 150, communications between the devices are not limited in this manner. The various communication protocols discussed herein are merely examples, and the present application is not limited thereto. In some embodiments, the vehicles 110 and the network service provider 120 can bi-directionally communicate via the network 150. In some embodiments, the vehicles 110 and the computing device 130 can communicate bi-directionally via the network 160. In some embodiments, the computing device 130 and the network service provider 120 can communicate bi-directionally via the network 150.

Illustratively, the set of vehicles 110 corresponds to one or more vehicles configured with data storage for storing data generated from electrical components in the vehicle 110. The data, for example, can include log data generated from sensors installed in the vehicle, any processed data related to the vehicle operation such as engine oil data, coolant temperature, milage, oxygen, knocking information from various sensors, etc. The data can also include diagnosed data, an automated driving (e.g., self-driving) related data. In one embodiment, the data can be received from an external device. By way of illustration, the vehicles 110 can include computing devices that can be considered to be integrated or form a part to the vehicle. In other embodiments, users may also have additional computing devices, such as mobile devices, that will may be considered to be associated with the vehicle, including mobile devices tethered to, or in close proximity with, a vehicle. For purposes of the present application, a computing device will be generally interpreted as being one of these embodiments or variations thereof.

Illustratively, the network service provider 120 can include a vehicle data access service 112 that can provide functionality responsive to authenticating technicians as applied to aspects of the present application. The network service provider 120 can include one or more data stores for storing vehicle diagnostic results associated with aspects of the present application. The vehicle data access service 112 and data store 114 in FIG. 1 are logical in nature and can be implemented in the network service provider 120 in a variety of manners.

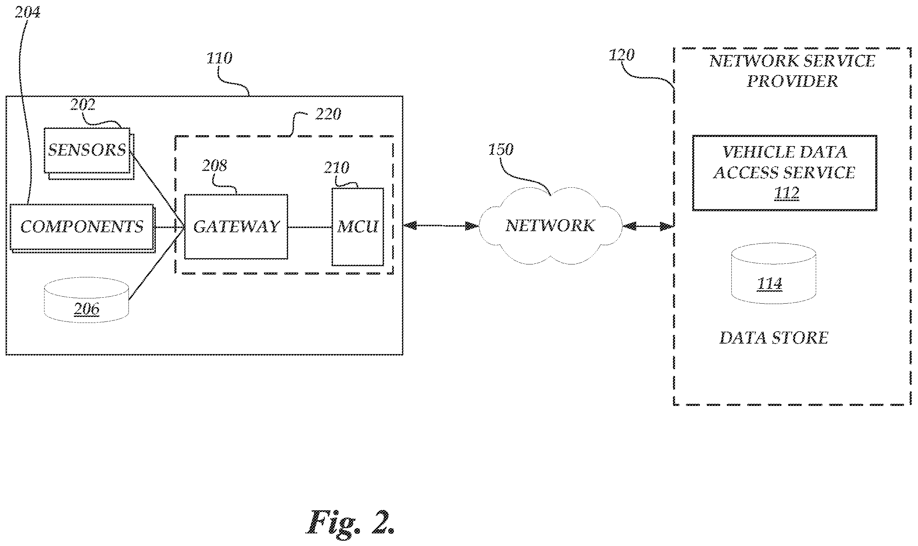

FIG. 2 illustrates an environment where a vehicle 110 communicates with a network service provider 120 via a network 150 connection. The vehicle 110 may include communication functionality, including hardware and software, that facilitate interaction via one of a plurality of communication mediums and communication protocols. More specifically, the vehicle 110 can include a plurality of sensors 202, components 204, and vehicle data store 206 for obtaining, generating and maintaining vehicle data, such as operation parameters, sensor values, or other information associated with a vehicle. The data, for example, can include log data generated from sensors installed in the vehicle, any processed data related to the vehicle operation such as engine oil data, coolant temperature, milage, oxygen, knocking information from various sensors, etc. The data can also include diagnosed data, an automated driving (e.g., self-driving) related data. In some embodiments, the vehicle data provided by the components 204 can include processed data in which a controller, logic unit, processor, and the like has processed sensor information and generated additional information, such as a vision system that can utilize inputs from one or more camera sensors and provide outputs corresponding to the identification of environmental conditions that promote the accumulation of objects/obstructions on the fascia (e.g., a processing of raw camera image data and the generation of outputs corresponding to the processing of the raw camera image information). The sensors 202 can be camera sensors that is associated with vision systems for determining vehicle operational status, environmental status or other information. In other embodiments, the camera sensors can be separate from the sensors 202, such as for non-camera sensor components or vehicles having multiple camera sensors. In still another example, the components 204 can include a control component that can utilize additional information obtained from, or otherwise associated with, positioning systems, calendaring systems, or time-based systems. In still a further example, the historical information can be incorporated as a separate information source to the control component or be utilized to process at least some portion of the set of information sources, such as detected vehicle speed, external temperature measurements, and operational status of the windshield wiper, vision system (e.g., camera inputs), location systems (e.g., GPS systems), timing information, operational status of the radar components, etc.

In one aspect, the sensors 202 can include vision systems that provide inputs to the vehicle 110, such as detection of objects, attributes of detected objects (e.g., position, velocity, acceleration), presence of environment conditions (e.g., snow, rain, ice, fog, smoke, etc.), and the like. In some embodiments, vehicles 110 can rely on such vision systems for defined vehicle operational functions without assistance from or in place of other traditional detection systems.

In yet another aspect, the sensors 202 can include one or more positioning systems that can obtain reference information from external sources that allow for various levels of accuracy in determining positioning information for a vehicle. For example, the positioning systems can include various hardware and software components for processing information from GPS sources, Wireless Local Area Networks (WLAN) access point information sources, Bluetooth information sources, radio-frequency identification (RFID) sources, and the like. In some embodiments, the positioning systems can obtain combinations of information from multiple sources. Illustratively, the positioning systems can obtain information from various input sources and determine positioning information for a vehicle, specifically elevation at a current location. In other embodiments, the positioning systems can also determine travel-related operational parameters, such as the direction of travel, velocity, acceleration, and the like. The positioning system may be configured as part of a vehicle for multiple purposes including self-driving applications, enhanced driving or user-assisted navigation, and the like. Illustratively, the positioning systems can include processing components and data that facilitate the identification of various vehicle parameters or process information.

In still another aspect, the sensors 202 can include one or more navigations system for identifying navigation related information. Illustratively, the navigation systems can obtain positioning information from positioning systems and identify characteristics or information about the identified location, such as elevation, road grade, etc. The navigation systems can also identify suggested or intended lane locations in a multi-lane road based on directions that are being provided or anticipated for a vehicle user. Similar to the location systems, the navigation system may be configured as part of a vehicle for multiple purposes, including self-driving applications, enhanced driving or user-assisted navigation, and the like. The navigation systems may be combined or integrated with positioning systems. Illustratively, positioning systems can include processing components and data that facilitate the identification of various vehicle parameters or process information.

The local resources can further include one or more processing components 220 that may be hosted on the vehicle or a computing device accessible by a vehicle (e.g., a mobile computing device). The processing component(s) 220 can illustratively access inputs from various local sensors or sensor systems and process the inputted data and store the processed data. For purposes of the present application, the processing component(s) 220 will be described with regard to one or more functions related to illustrative aspects. For example, processing component(s) 220 in vehicle 110 will collect and transmit the data set corresponding to the request from authorized technicians.

The environment can further include various additional sensor components or sensing systems operable to provide information regarding various operational parameters for use in accordance with one or more of the operational states. The environment can further include one or more control components for processing outputs, such as the transmission of data through a communications output, generation of data in memory, the transmission of outputs to other processing components, and the like.

In some embodiments, the processing component 220 can include a gateway 208 and a microcontroller unit (MCU) 210. In some embodiments, the gateway 208 can be configured to receive and/or transmit data from and/or to the sensors 202, the components 204, and the vehicle data store 206. In these embodiments, the gateway 208 is connected to the sensors 202, components 204, and vehicle data store 206 via the vehicle communication bus. In some embodiments, the gateway 208 and the MCU 210 are connected via an ethernet. In some embodiments, the MCU 210 can be configured to connect the vehicle 110 with the network service provider 120 via the network 150. In some embodiments, the gateway 208 and the MCU 210, individually or in combination, can provide a security flow between the vehicle 110 and the network service provider 120. In some embodiments, the MCU 210 can receive one or more commands from the network service provider 120 and convert the commands to be used by the gateway 208, such that the MCU 210, after receiving a command or a request from the network service provider 120, generates a command to the gateway to process a portion of vehicle data based on the command or request received from the network service provider. For example, the network service provider 120 may request a video or image streaming data associated with a specific event. In this example, the MCU 210 may receive the request and generate another command to be used for gateway 208 to search the vehicle data corresponding to the request from the network service provider 120.

In some embodiments, to establish a secure connection, a random security key is provided from the network service provider 120, where the random security key is only valid once and for a single connection attempt and expires within a set period of time. In this example, the MCU 210 can read the random security key and transmit the code to the gateway 208. In some embodiments, the gateway 208 may transmit the vehicle data to the network service provider 120 by using an internet protocol, such as a user datagram protocol (UDP). Thus, the vehicle data can be transmitted to the network service provider 120 in real-time or near real-time.

In some embodiments, the gateway 208 and MCU 210 define a UDP-based application programming interface (API) that allows the MCU 210 to request a specific set of messages be streamed to the network service provider 120. This message set can be vehicle specific and contains pairs of (bus ID, message ID) identifiers that inform the gateway 208 which messages need to be streamed. The gateway 208 then forwards these messages at regular intervals (e.g., every 10 milliseconds) to the MCU 210 via the ethernet. In some embodiments, this API also allows for editing the messages, which allows to request or remove streaming messages without having to restart the stream.

The network 150 illustratively corresponds to a one or more computing devices 130 that are operable to host a vehicle data access service 112 that can facilitate the interaction with individual selected vehicles as described herein. The network service provider 120 can further include one or more data store 114 for maintaining received vehicle data or configuration information for interfacing with vehicles as described herein. The network service provider 120 can be represented in a simplified, logical form and does not reflect all of the physical software and hardware components that may be implemented to provide the functionality associated with the network-based service.

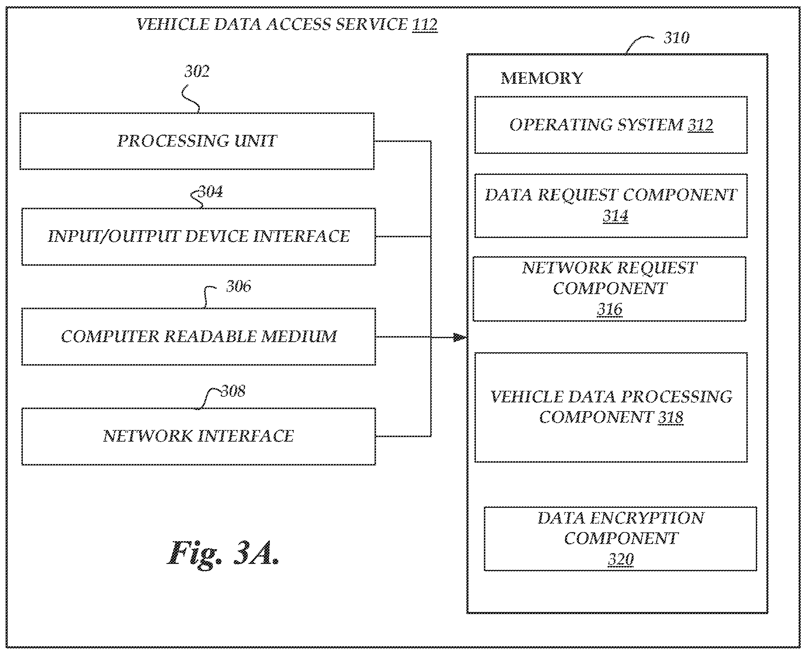

With reference now to FIG. 3A, an illustrative architecture for implementing a vehicle data access service 112 on a network service provider 120 will be described. The vehicle data access service 112 may be part of components/systems that can provide functionality associated with processing and storing vehicle data and requesting an access to the vehicle data by bi-directionally communicating with the vehicle.

The architecture of FIG. 3A is illustrative in nature and should not be construed as requiring any specific hardware or software configuration for the processing component. The general architecture of a vehicle data access service 112 depicted in FIG. 3A includes an arrangement of computer hardware and software components that may be used to implement aspects of the present disclosure. As illustrated, the processing component includes a processing unit 302, a network interface 308, a computer readable medium 306, and an input/output device interface 304, all of which may communicate with one another by way of a communication bus. The components of the processing component may be physical hardware components that can include one or more circuitries and software models.

The network interface 308 may provide connectivity to one or more networks or computing systems, such as the networks 150, 160 of FIG. 1. The processing unit 302 may thus receive information and instructions from other computing systems or services via a network. The processing unit 302 may also communicate to and from memory 310 and further provide output information via the input/output device interface. In some embodiments, the vehicle data access service 112 may include more (or fewer) components than those shown in FIG. 3A.

The memory 310 may include computer program instructions that the processing unit 302 executes in order to implement one or more embodiments. The memory 310 generally includes RAM, ROM, or other persistent or non-transitory memory. The memory 310 may store an operating system 312 that provides computer program instructions for use by the processing unit 302 in the general administration and operation of the vehicle data access service 112. The memory 310 may further include computer program instructions and other information for implementing aspects of the present disclosure. For example, in one embodiment, the memory 310 includes a data request component 314. The data request component also can be generally referred to as a streaming data request component. In some embodiments, the data request component 314 can identify a requested vehicle information that will be requested from a selected vehicle. The requested vehicle information can be a streaming data request. Illustratively, a user, through a mobile client or another computing device, configures a profile and structured data for utilization in requesting data from vehicle. Illustratively, the user can provide permission to create a profile for requesting information and specific parameters/rules that are utilized in the transmission of vehicle data. This can include parameters regarding processing of requests, specification of rules for selecting vehicle data, specified or default duration of vehicle maintained in the network service provider, and the like. Some or a portion of the parameters may also be specified at the time of a request to share with a specific vehicle. Aspects of the present application correspond to dynamically requesting vehicle data without being limited to any particularly predefined or standardized set of information (e.g., fixed messages). A user may utilize predefined templates for the selection in accordance with some embodiments, but may further edit, supplement or vary from the predefined templates.

The memory 310 can further include a network request component 316. The network request component 316 can collect network performance information, such as the network bandwidth, or by predefined rules in accessing to the vehicle data, such as predefined bi-directional data communication protocol. In some embodiments, the network request component 316 may identify timing of initiating a communication with a vehicle. The timing of initiating the communication can be a timing of requests for vehicle data from the vehicle. In some embodiments, the network request component 316 may monitor network performance information to determine the timing of initiating requests for vehicle data, what vehicle data is requested, and the like. For example, the network request component 316 may utilize the collected network performance information to determine when vehicle data requests may be initiated. In another example, the network request component 316 may utilize network performance information to select or filter between different requested information during times of lower quality (relative) network conditions, such as selecting higher priority information. In a further example, the network request component 316 may implement different timing or spacing for data transmission in scenarios in which the network conditions are experiencing higher variability in quality or may be characterized as experiencing deteriorating conditions. Illustratively, network performance information can include, but is not limited, to available bandwidth, latency measurements, transmission error rates, and the like.

The memory 310 can further include a vehicle processing component 318. In some embodiments, the vehicle processing component 318 can illustratively transmit a User Datagram Protocol (UDP)-based vehicle data request. Illustratively, the UDP-based transmissions correspond to connectionless Internet protocol wherein error-checking and recovery services are not required. In accordance with illustrative embodiment, transmission based on UDP may characterized as "faster" relative to other protocols because UDP does not require additional latencies associated with opening a connection, maintaining a connection, or terminating request. By comparison, a Transmission Control Protocol (TCP) protocol corresponds to a connection-oriented protocol with built-in systems to check for errors and to guarantee data will be delivered in the order it was sent. UDP based messaging does not typically include functionality for retransmission of missed data packets or ordered delivery of data. Although aspects of the present application relate to a preference for UDP based communications, in alternative embodiments, the vehicle processing component 318 can utilize other communication protocols, including TCP based messages. In some embodiments, the vehicle processing component 318 can perform a post processing after receiving a vehicle information or data from the vehicle. For example, the vehicle processing component 318 can receive the responsive data and analyze the received UDP packets, such as for determining the requested vehicle operation parameters, status, and the like. In some embodiments, the vehicle processing component 318 can utilize attributes of the transmitted packets to update the network conditions.

The memory 310 can further include a data encryption component 320. In some embodiments, the computing device 130 can transmit the encrypted keys and encrypted data to the vehicle data access service 112 without the master data key. In these embodiments, the data encryption component 320 maintains the encrypted information for utilization in sharing. In some embodiments, to establish a secure connection, a random security key is provided to the data encryption component 320 from the user via the computing device 130, where the random security key is only valid once and for a single connection attempt and expires within in a set period of time. In these embodiments, the vehicle data access service 112 can read the random security key.

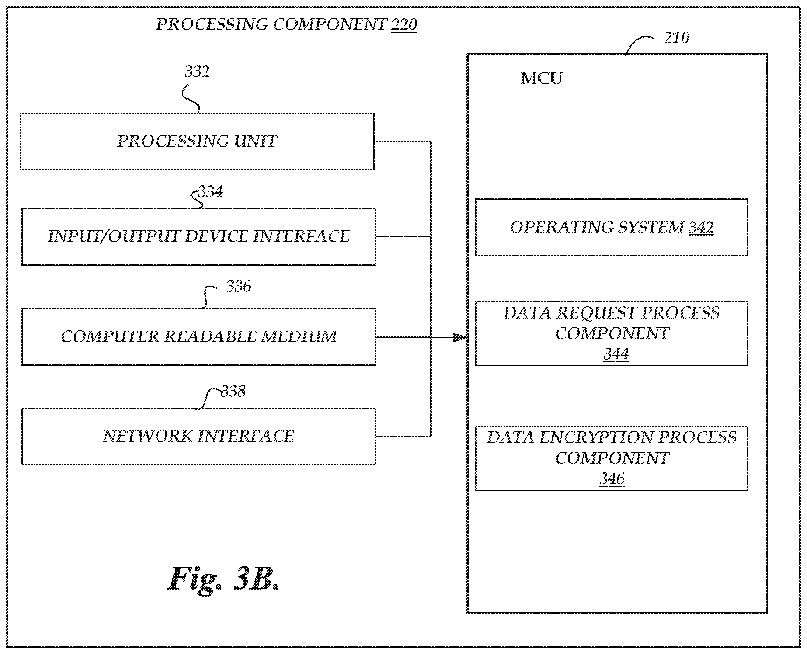

With reference now to FIG. 3B, an illustrative architecture for implementing a processing component on a vehicle 110 will be described. The processing component 220 may be part of components/systems that can provide functionality associated with processing and storing vehicle data and providing access to the stored data for a user by receiving the user's authorized information. The user may include but is not limited to an administrator, a developer, a service technician, a vehicle driver, etc.

The architecture of FIG. 3B is illustrative in nature and should not be construed as requiring any specific hardware or software configuration for the processing component. The general architecture of the processing component 220 of a vehicle depicted in FIG. 3B includes an arrangement of computer hardware and software components that may be used to implement aspects of the present disclosure. As illustrated, the processing component includes a processing unit 332, a network interface 338, a computer readable medium 336, and an input/output device interface 334, all of which may communicate with one another by way of a communication bus. The components of the processing component may be physical hardware components that can include one or more circuitries and software models.

The network interface 338 may provide connectivity to one or more networks or computing systems, such as the networks 150, 160 of FIG. 1. The processing unit 332 may thus receive information and instructions from other computing systems or services via a network. The processing unit 332 may also communicate to and from a microcontroller unit (MCU) 210 and further provide output information via the input/output device interface 334. In some embodiments, a memory can be implemented to perform one or more functions of the MCU 210. In some embodiments, the processing component 220 may include more (or fewer) components than those shown in FIG. 3B.

The MCU 210 may include computer program instructions that the processing component 220 executes in order to implement one or more embodiments. The MCU 210 generally includes RAM, ROM, or other persistent or non-transitory memory. The MCU 210 may store an operating system 342 that provides computer program instructions for use by the processing unit 332 in the general administration and operation of the processing component 220. The MCU 210 may further include computer program instructions and other information for implementing aspects of the present disclosure. For example, in one embodiment, the MCU 210 includes a data request process component 344. In some embodiments, the data request process component 344 can receive the data request and processes the data request to identify the requested data. Illustratively, the data request can specify the type, format and size of the requested data without limitation to a predefined or preconfigured format. Accordingly, in one embodiment, the data request process component 344 can include processing components that can parse received data requests, identify requested data and issue commands. In some embodiments, the data request process component 344 can collect and processes the requested information. Illustratively, the processing of the vehicle information can include filtering, normalization, averaging or other data processing. For example, the data request can include filtering criteria or other processing configuration information that facilitates the selection of vehicle data for processing. In other embodiments, the data request process component 344 can transmit UDP-based transmissions to provide for decreased latency, increased packet transmissions, etc.

The MCU 210 may further include a data encryption process component 346. In some embodiments, to establish a security connection, a random security key is provided from the network service provider 120, where the random security key is only valid once and for a single connection attempt and expires within in a set period of time. In this example, the data encryption process component 346 can read the random security key and process the code. In some embodiments, the data encryption process component 346 may authorize the code and process the vehicle data to transmit the data by using an internet protocol, such as a user datagram protocol (UDP). Thus, the vehicle data can be transmitted to the network service provider 120 in real-time or near real-time.

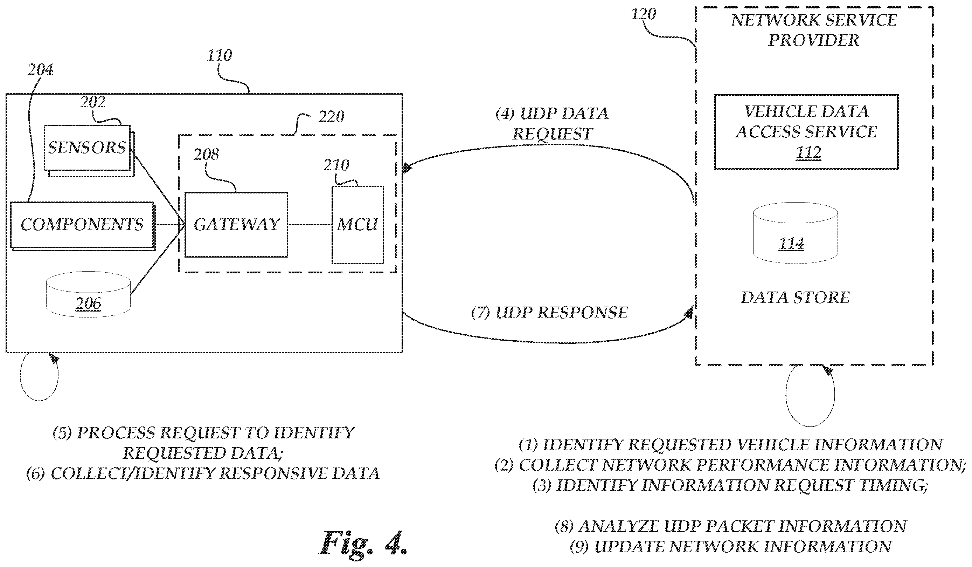

With reference now to FIG. 4, an illustrative interaction between the network service provider 120 and an individual vehicle 110 can be described. Although only a single interaction is illustrated, the present application is not limited to a single interaction. Rather, individual iterations of the illustrated interaction can result in different exchanges of vehicle information based on the configuration of the selected vehicles, different vehicle data requests, monitoring or diagnostic applications being performed by the vehicle data access service 112 and the like, as implemented in the network service provider 120.

At (1), the vehicle data access service 112 can identify a requested vehicle information that will be requested from a selected vehicle. The requested vehicle information can be a streaming data request. Illustratively, a user, through a mobile client or another computing device, configures a profile and structured data for utilization in requesting data from vehicle. Illustratively, the user can provide permission to create a profile for requesting information and specific parameters/rules that are utilized in the transmission of vehicle data. This can include parameters regarding processing of requests, specification of rules for selecting vehicle data, specified or default duration of vehicle maintained in the network service provider, and the like. Some or a portion of the parameters may also be specified at the time of a request to share with a specific vehicle. As previously indicated, aspects of the present application correspond to dynamically requesting vehicle data without being limited to any particular predefined or standardized set of information (e.g., fixed messages). A user may utilize predefined templates for the selection in accordance with some embodiments, but may further edit, supplement or vary from the predefined templates.

At (2), the vehicle data access service 112 can collect network performance information, such as the network bandwidth, or by predefined rules in accessing to the vehicle data, such as predefined bi-directional data communication protocol.

At (3), the vehicle data access service 112 may identify timing of initiating a communication with a vehicle. The timing of initiating the communication can be a timing of requests for vehicle data from the vehicle. In some embodiments, the vehicle data access service 112 may monitor network performance information to determine the timing of initiating requests for vehicle data, what vehicle data is requested, and the like. For example, the vehicle data access service 112 may utilize the collected network performance information to determine when vehicle data requests may be initiated. In another example, the vehicle data access service 112 may utilize network performance information to select or filter between different requested information during times of lower quality (relative) network conditions, such as selecting higher priority information. In a further example, the vehicle data access service 112 may implement different timing or spacing for data transmission in scenarios in which the network conditions are experiencing higher variability in quality or may be characterized as experiencing deteriorating conditions. Illustratively, network performance information can include, but is not limited, to available bandwidth, latency measurements, transmission error rates, and the like.

At (4), the vehicle data access service 112 can illustratively transmit a User Datagram Protocol (UDP)-based vehicle data request. Illustratively, the UDP-based transmissions correspond to connectionless Internet protocol wherein error-checking and recovery services are not required. In accordance with illustrative embodiment, transmission based on UDP may characterized as "faster" relative to other protocols because UDP does not require additional latencies associated with opening a connection, maintaining a connection, or terminating request. By comparison, a Transmission Control Protocol (TCP) protocol corresponds to a connection-oriented protocol with built-in systems to check for errors and to guarantee data will be delivered in the order it was sent. UDP based messaging does not typically include functionality for retransmission of missed data packets or ordered delivery of data. Although aspects of the present application relate to a preference for UDP based communications, in alternative embodiments, the vehicle data access service 112 can utilize other communication protocols, including TCP based messages.

At (5), the vehicle can receive the data request and processes the data request to identify the requested data. Illustratively, the data request can specify the type, format and size of the requested data without limitation to a predefined or preconfigured format. Accordingly, in one embodiment, the gateway can include processing components that can parse received data requests, identify requested data and issue commands. At (6), the vehicle can collect and processes the requested information. Illustratively, the processing of the vehicle information can include filtering, normalization, averaging or other data processing. For example, the data request can include filtering criteria or other processing configuration information that facilitates the selection of vehicle data for processing. In other embodiments, the vehicle may be configured to directly transmit raw or unprocessed data directly to the vehicle data access service 112.

At (7), the vehicle can provide a stream of responsive vehicle data. Illustratively the vehicle transmits UDP-based transmissions to provide for decreased latency, increased packet transmissions, etc. At (8), the vehicle data access service 112 can receive the responsive data and analyzes the received UDP packets, such as for determining the requested vehicle operation parameters, status, and the like. Additionally, at (9), the vehicle data access service 112 can utilize attributes of the transmitted packets to update the network conditions. The process will repeat for additional requested information based on the updated network conditions.

In some embodiments, the computing device 130 can generate a plurality of data structure keys to individually encrypt the structured profile data. More specifically, the profile information can be provided with a plurality of class encryption keys that allows for the encryption of each individual class of the profile information. Each individual sub-class may also be associated with a different or same key within a class to individually encrypt each sub-class, or label. Finally, a master data key will be utilized to encrypt the full selection of encrypted class data. As part of the roll up of encryption, the label keys are encrypted by the class key. The class keys are then encrypted by the master data key. Accordingly, at (3) and (4), the entirety of the data structure is encrypted and the keys utilized to encrypt the portions of the data structure are also encrypted.

At (5), the computing device 130 can transmit the encrypted keys and encrypted data to the vehicle data access service 112 without the master data key. At (6), the vehicle data access service 112 maintains the encrypted information for utilization in sharing. However, because the master data key is not provided to the vehicle data access service 112, it is not possible for the vehicle data access service 112 to access the encrypted data keys to decrypt the encrypted structured data. In some embodiments, to establish a security connection, a random security key is provided to the vehicle data access service 112 from the user via the computing device 130, where the random security key is only valid once and for a single connection attempt and expires within in a set period of time. In these embodiments, the vehicle data access service 112 can read the random security key.

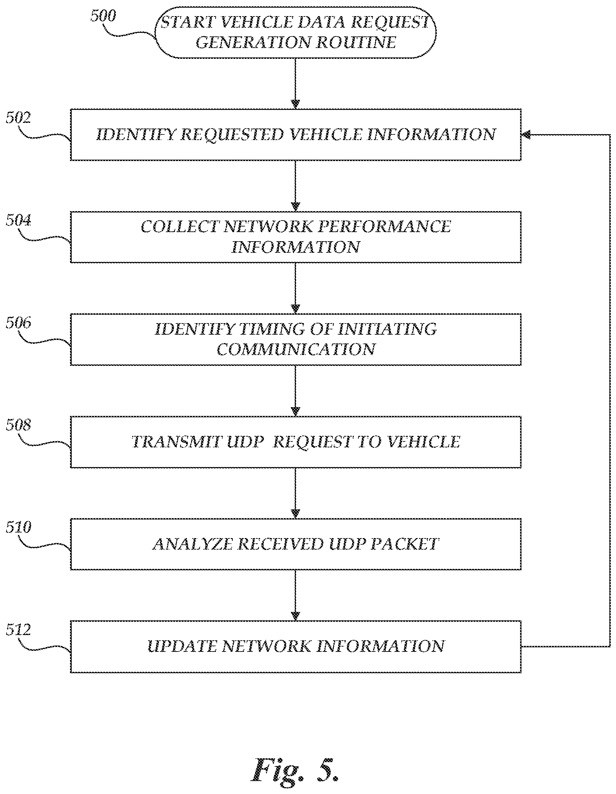

Turning now to FIG. 5, a routine 500 for performing vehicle data request generation will be described. Routine 500 is illustratively implemented by the vehicle data access service 112.

At block 502, the vehicle data access service 112 can identify a requested vehicle information that will be requested from a selected vehicle. The requested vehicle information can be a streaming data request. Illustratively, a user, through a mobile client or another computing device, configures a profile and structured data for utilization in requesting data from vehicle. Illustratively, the user can provide permission to create a profile for requesting information and specific parameters/rules that are utilized in the transmission of vehicle data. This can include parameters regarding processing of requests, specification of rules for selecting vehicle data, specified or default duration of vehicle maintained in the network service provider, and the like. Some or a portion of the parameters may also be specified at the time of a request to share with a specific vehicle. As previously indicated, aspects of the present application correspond to dynamically requesting vehicle data without being limited to any particularly predefined or standardized set of information (e.g., fixed messages). A user may utilize predefined templates for the selection in accordance with some embodiments, but may further edit, supplement or vary from the predefined templates.

At block 504, the vehicle data access service 112 can collect network performance information, such as the network bandwidth, or by predefined rules in accessing to the vehicle data, such as predefined bi-directional data communication protocol.

At block 506, the vehicle data access service 112 may identify timing of initiating a communication with a vehicle. The timing of initiating the communication can be a timing of requests for vehicle data from the vehicle. In some embodiments, the vehicle data access service 112 may monitor network performance information to determine the timing of initiating requests for vehicle data, what vehicle data is requested, and the like. For example, the vehicle data access service 112 may utilize the collected network performance information to determine when vehicle data requests may be initiated. In another example, the vehicle data access service 112 may utilize network performance information to select or filter between different requested information during times of lower quality (relative) network conditions, such as selecting higher priority information. In a further example, the vehicle data access service 112 may implement different timing or spacing for data transmission in scenarios in which the network conditions are experiencing higher variability in quality or may be characterized as experiencing deteriorating conditions. Illustratively, network performance information can include, but is not limited, to available bandwidth, latency measurements, transmission error rates, and the like.

At block 508, the vehicle data access service 112 can illustratively transmit a User Datagram Protocol (UDP)-based vehicle data request. Illustratively, the UDP-based transmissions correspond to connectionless Internet protocol wherein error-checking and recovery services are not required. In accordance with illustrative embodiment, transmission based on UDP may characterized as "faster" relative to other protocols because UDP does not require additional latencies associated with opening a connection, maintaining a connection, or terminating request. By comparison, a Transmission Control Protocol (TCP) protocol corresponds to a connection-oriented protocol with built-in systems to check for errors and to guarantee data will be delivered in the order it was sent. UDP based messaging does not typically include functionality for retransmission of missed data packets or ordered delivery of data. Although aspects of the present application relate to a preference for UDP based communications, in alternative embodiments, the vehicle data access service 112 can utilize other communication protocols, including TCP based messages.

At block 510, the vehicle data access service 112 can receive the responsive data and analyzes the received UDP packets, such as for determining the requested vehicle operation parameters, status, and the like.

At block 512, the vehicle data access service 112 can utilize attributes of the transmitted packets to update the network conditions. The process will repeat for additional requested information based on the updated network conditions. For example, after updating the network conditions, the process can be repeated at block 502.

Additionally, the computing device 130 can generate a plurality of data structure keys to individually encrypt the structured profile data. More specifically, the profile information can be provided with a plurality of class encryption keys that allows for the encryption of each individual class of the profile information. Each individual sub-class may also be associated with a different or same key within a class to individually encrypt each sub-class, or label. Finally, a master data key will be utilized to encrypt the full selection of encrypted class data. As part of the roll up of encryption, the label keys are encrypted by the class key. The class keys are then encrypted by the master data key. Accordingly, at blocks 506 and 508, the entirety of the data structure is encrypted and the keys utilized to encrypt the portions of the data structure are also encrypted.

At block 510, the computing device 130 can transmit the encrypted keys and encrypted data to the vehicle data access service 112 without the master data key. At block 512, the vehicle data access service 112 maintains the encrypted information for utilization in sharing. However, because the master data key is not provided to the vehicle data access service 112, it is not possible for the vehicle data access service 112 to access the encrypted data keys to decrypt the encrypted structured data. In some embodiments, to establish a security connection, a random security key is provided to the vehicle data access service 112 from the user via the computing device 130, where the random security key is only valid once and for a single connection attempt and expires within in a set period of time. In these embodiments, the vehicle data access service 112 can read the random security key.

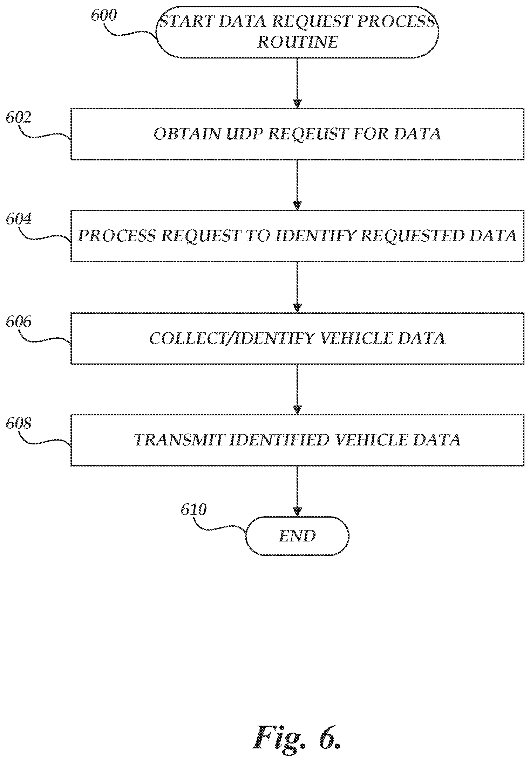

Turning now to FIG. 6, a routine 600 for performing vehicle data request process will be described. Routine 600 is illustratively implemented by one or more vehicles.

At block 602, the vehicle can obtain the data process request. At block 604, the vehicle can process the data request to identify the requested data. Illustratively, the data request can specify the type, format and size of the requested data without limitation to a predefined or preconfigured format. Accordingly, in one embodiment, the gateway can include processing components that can parse received data requests, identify requested data and issue commands.

In some embodiments, the vehicle can include a gateway 208 and a microcontroller unit (MCU) 210. In some embodiments, the gateway 208 can be configured to receive and/or transmit data from and/or to the sensors 202, the components 204, and the vehicle data store 206. In these embodiments, the gateway 208 is connected to the sensors 202, components 204, and vehicle data store 206 via vehicle communication bus. In some embodiments, the gateway 208 and the MCU 210 are connected via an ethernet. In some embodiments, the MCU 210 can be configured to connect the vehicle 110 with the network service provider 120 via the network 150. In some embodiments, the gateway 208 and the MCU 210, individually or in combination, can provide a security flow between the vehicle 110 and the network service provider 120. In some embodiments, the MCU 210 can receive one or more commands from the network service provider 120 and convert the commands to be used by the gateway 208, such that the MCU 210, after receiving a command or a request from the network service provider 120, generates a command to the gateway to process a portion of vehicle data based on the command or request received from the network service provider. For example, the network service provider 120 may request a video streaming data associated a specific event. In this example, the MCU 210 may receive the request and generate another command to be used for the gateway 208 to search the vehicle data corresponding to the request from the network service provider 120.

In some embodiments, the gateway 208 and MCU 210 define a UDP-based application programming interface (API) that allows the MCU 210 to request a specific set of messages be streamed to the network-based service 120. This message set can be vehicle specific and contains pairs of (bus ID, message ID) identifiers that inform the gateway 208 which messages need to be streamed. The gateway 208 then forwards these messages at regular intervals (e.g., every 10 milliseconds) to the MCU 210 via the ethernet. In some embodiments, this API also allows for editing the messages, which allows to request or remove streaming messages without having to restart the stream.

At block 606, the vehicle can collect and processes the requested information. Illustratively, the processing of the vehicle information can include filtering, normalization, averaging or other data processing. For example, the data request can include filtering criteria or other processing configuration information that facilitates the selection of vehicle data for processing. In other embodiments, the vehicle may be configured to directly transmit raw or unprocessed data directly to the vehicle data access service 112.

At block 608, the vehicle can transmit the identified vehicle data, as a stream of responsive vehicle data. Illustratively the vehicle transmits UDP-based transmissions to provide for decreased latency, increased packet transmissions, etc. The routing 600 can be ended at block 610.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, a person of ordinary skill in the art will recognize that changes may be made in form and detail without departing from the scope of the present disclosure. Thus, the present disclosure is limited only by the claims.

In the foregoing specification, the disclosure has been described with reference to specific embodiments. However, as one skilled in the art will appreciate, various embodiments disclosed herein can be modified or otherwise implemented in various other ways without departing from the scope of the disclosure. Accordingly, this description is to be considered as illustrative and is for the purpose of teaching those skilled in the art the manner of making and using various embodiments of the disclosed air vent assembly. It is to be understood that the forms of disclosure herein shown and described are to be taken as representative embodiments. Equivalent elements, materials, processes, or steps may be substituted for those representatively illustrated and described herein. Moreover, certain features of the disclosure may be utilized independently of the use of other features, all as would be apparent to one skilled in the art after having the benefit of this description of the disclosure. Expressions such as "including", "comprising", "incorporating", "consisting of", "have", "is" used to describe and claim the present disclosure are intended to be construed in a non-exclusive manner, namely allowing for items, components or elements not explicitly described also to be present. Reference to the singular is also to be construed to relate to the plural.

Further, various embodiments disclosed herein are to be taken in the illustrative and explanatory sense, and should in no way be construed as limiting of the present disclosure. All joinder references (e.g., attached, affixed, coupled, connected, and the like) are only used to aid the reader's understanding of the present disclosure, and may not create limitations, particularly as to the position, orientation, or use of the systems and/or methods disclosed herein. Therefore, joinder references, if any, are to be construed broadly. Moreover, such joinder references do not necessarily infer that two elements are directly connected to each other.

Additionally, all numerical terms, such as, but not limited to, "first", "second", "third", "primary", "secondary", "main" or any other ordinary and/or numerical terms, should also be taken only as identifiers, to assist the reader's understanding of the various elements, embodiments, variations and/or modifications of the present disclosure, and may not create any limitations, particularly as to the order, or preference, of any element, embodiment, variation and/or modification relative to, or over, another element, embodiment, variation and/or modification.

It will also be appreciated that one or more of the elements depicted in the drawings/figures can also be implemented in a more separated or integrated manner, or even removed or rendered as inoperable in certain cases, as is useful in accordance with a particular application.

## Claims

1. A system for managing streaming of vehicle data comprising a network service provider (120) and one or more vehicles (110), the network service provider (120) comprising:
one or more computing processors and memories associated with a vehicle data access service (112), wherein the vehicle data access service (112) is configured to:
obtain a streaming data request, wherein the streaming data request includes a requested vehicle (110) information;
identify, from the obtained streaming data request, the requested vehicle (110) information from the one or more vehicles (110) and streaming data parameters, the streaming data parameters comprising specification rules for selecting vehicle (110) information;
collect a network performance information to determine a timing of initiating a communication with the vehicle (110);
in response to determining the timing of initiating the communication with a vehicle (110) associated with the identified requested vehicle (110) information, establish a wireless communication path with the vehicle (110), wherein the wireless communication path is established using a user datagram protocol, UDP, the establishing of a wireless communication path comprising:
transmitting a UDP based streaming data request based on the streaming data parameters, to microcontrollers, MCUs (210), included in the one or more vehicles (110), wherein an MCU (210) of a vehicle (110) is in communication with a gateway (208) of the vehicle (110), wherein the MCU (210) and the gateway (208) define a UDP-based application programming interface, API, wherein the UDP based streaming data request is configured to be converted via the MCU (210) to generate another command to be used for the gateway (208) to search the vehicle (110) data corresponding to the request,
wherein the UDP based streaming data request is a stream of responsive vehicle (110) data corresponding to the obtained streaming data request, and wherein the API allows for editing the streaming data request without having to restart the stream; and
receiving, from the vehicle (110), the stream of responsive vehicle (110) data; and
in response to receiving the stream of responsive vehicle (110) data, analyzing the stream of responsive vehicle (110) data.

2. The system as recited in Claim 1, wherein the streaming data parameters further comprises parameters regarding processing of the streaming data request, and a specified duration of vehicle (110) maintained in the network service provider (120) and wherein the vehicle data access service (112) is configured to include one or more templates of the streaming data parameters.

3. The system as recited in Claim 1, wherein the network performance information includes an available network bandwidth, latency measurements, and transmission error rates.

4. The system as recited in Claim 1, wherein the UDP based transmission is based on an internet protocol, wherein the UDP based transmission does not require an error-checking service and a recovery service, and wherein the vehicle data access service (112) is further configured to update a network condition based on network attributes generated from the UDP based transmission.

5. The system as recited in Claim 1, wherein the analyzing the stream of responsive data includes determining requested vehicle (110) operation parameters and an environmental status of the vehicle (110) detected by sensors (202), the sensors (202) comprising at least a vision system .

6. The system as recited in Claim 1, wherein the vehicle data access service (112) meter the streaming data request for high bandwidth data when communication network conditions do not meet or exceed network performance thresholds.

7. A method for managing streaming of vehicle (110) data with one or more vehicles (110), the method comprising:
Obtaining, by a vehicle data access service (112) associated with a network service provider (120), a streaming data request to stream from a selected vehicle, wherein the streaming data request includes a requested vehicle (110) information;
identifying, from the obtained streaming data request, by the vehicle data access service (112), the requested vehicle (110) information from the one or more vehicles (110) and streaming data parameters, the streaming data parameters comprising specification rules for selecting vehicle (110);
collecting a network performance information, by the vehicle data access service (112), to determine a timing of initiating a communication with the vehicle (110);
in response to determining the timing of initiating the communication, establishing a wireless communication path with the vehicle (110), by the vehicle data access service (112), wherein the wireless communication path is established using a user datagram protocol, UDP, the establishing of a wireless communication path comprising:
transmitting, by the vehicle data access services (112), a UDP based streaming data request based on the streaming data parameters to the one or more vehicles (110),
receiving the UDP based streaming data request by microcontrollers, MCUs (210), included in the one or more vehicles (110), wherein an MCU (210) of a vehicle (110) is in communication with a gateway (208) of the vehicle (110), wherein the MCU (210) and the gateway (208) define a UDP-based application programming interface, API, wherein the UDP based streaming data request is configured to be converted via the MCU (210) to generate another command to be used for the gateway (208) to search the vehicle (110) data corresponding to the request,
wherein the UDP based streaming data request is a stream of responsive vehicle (110) data corresponding to the obtained streaming data request and wherein the API allows for editing the streaming data request without having to restart the stream; and
sending, by the one or more vehicles (110), the stream of response vehicle (110) data to the vehicle access service (112); and
receiving, by the vehicle data access service (112), from the one or more vehicles (110), the stream of responsive vehicle (110) data; and
in response to receiving the stream of responsive vehicle (110) data, analyzing, by the vehicle data access service (112), the stream of responsive vehicle (110) data.

8. The method as recited in Claim 7, wherein the streaming data parameters further comprise parameters regarding processing of the streaming data request, and a specified duration of vehicle (110) maintained in a network service provider (120).

## Patentansprüche

1. System zum Verwalten des Streamings von Fahrzeugdaten, das einen Netzwerkdienstanbieter (120) und ein oder mehrere Fahrzeuge (110) aufweist, wobei der Netzwerkdienstanbieter (120) Folgendes aufweist:
einen oder mehrere Rechenprozessoren und Speicher, die einem Fahrzeugdatenzugriffsdienst (112) zugeordnet sind, wobei der Fahrzeugdatenzugriffsdienst (112) für Folgendes konfiguriert ist:
Erhalten einer Streaming-Datenanforderung, wobei die Streaming-Datenanforderung angeforderte Fahrzeuginformationen enthält;
Identifizieren der angeforderten Fahrzeuginformationen aus dem einen oder den mehreren Fahrzeugen (110) und von Streaming-Datenparametern anhand der empfangenen Streaming-Datenanforderung, wobei die Streaming-Datenparameter Spezifikationsregeln zum Auswählen von Fahrzeuginformationen enthalten;
Erfassen von Netzwerkleistungsinformationen, um einen Zeitpunkt zum Starten einer Kommunikation mit dem Fahrzeug (110) zu bestimmen;
als Reaktion auf das Bestimmen des Zeitpunkts zum Starten der Kommunikation mit einem Fahrzeug (110), das den identifizierten angeforderten Fahrzeuginformationen zugeordnet ist, Herstellen eines drahtlosen Kommunikationspfads mit dem Fahrzeug (110), wobei der drahtlose Kommunikationspfad unter Verwendung eines Benutzer-Datagramm-Protokolls, UDP, hergestellt wird, wobei das Herstellen eines drahtlosen Kommunikationspfads Folgendes umfasst:
Übertragen einer UDP-basierten Streaming-Datenanforderung basierend auf den Streaming-Datenparametern an Mikrocontroller, MCUs (210), die in dem einen oder den mehreren Fahrzeugen (110) enthalten sind, wobei eine MCU (210) eines Fahrzeugs (110) mit einem Gateway (208) des Fahrzeugs (110) in Kommunikation steht, wobei die MCU (210) und das Gateway (208) eine UDP-basierte Anwendungsprogrammierschnittstelle, API, definieren, wobei die UDP-basierte Streaming-Datenanforderung dazu konfiguriert ist, über die MCU (210) umgewandelt zu werden, um einen anderen Befehl zu erzeugen, der für das Gateway (208) verwendet werden kann, um die der Anforderung entsprechenden Fahrzeugdaten zu suchen,
wobei die UDP-basierte Streaming-Datenanforderung ein Stream von responsiven Fahrzeugdaten ist, die der erhaltenen Streaming-Datenanforderung entsprechen, und wobei die API das Bearbeiten der Streaming-Datenanforderung ermöglicht, ohne dass der Stream neu gestartet werden muss; und
Empfangen des Streams von responsiven Fahrzeugdaten vom Fahrzeug (110); und
als Reaktion auf das Empfangen des Streams von responsiven Fahrzeugdaten, Analysieren des Streams von responsiven Fahrzeugdaten.

2. System nach Anspruch 1, wobei die Streaming-Datenparameter ferner Parameter bezüglich des Verarbeitens der Streaming-Datenanforderung und einen spezifizierten Zeitraum, während dem das Fahrzeug (110) beim Netzwerkdienstanbieter (120) behalten wird, umfassen, und wobei der Fahrzeugdatenzugriffsdienst (112) dazu konfiguriert ist, eine oder mehrere Vorlagen der Streaming-Datenparameter zu enthalten.

3. System nach Anspruch 1, wobei die Netzwerkleistungsinformationen eine verfügbare Netzwerkbandbreite, Latenzmessungen und Übertragungsfehlerraten enthalten.

4. System nach Anspruch 1, wobei die UDP-basierte Übertragung auf einem Internetprotokoll basiert, wobei die UDP-basierte Übertragung keinen Fehlerüberprüfungsdienst und keinen Wiederherstellungsdienst erfordert, und wobei der Fahrzeugdatenzugriffsdienst (112) ferner dazu konfiguriert ist, einen Netzwerkzustand basierend auf anhand der UDP-basierten Übertragung erzeugten Netzwerkattributen zu aktualisieren.

5. System nach Anspruch 1, wobei das Analysieren des Streams von responsiven Daten das Bestimmen angeforderter Fahrzeugbetriebsparameter und eines durch Sensoren (202) detektierten Umgebungszustands des Fahrzeugs (110) enthält, wobei die Sensoren (202) mindestens ein Sehsystem umfassen.

6. System nach Anspruch 1, wobei der Fahrzeugdatenzugriffsdienst (112) die Streaming-Datenanforderung für Daten mit hoher Bandbreite dosiert, wenn die Kommunikationsnetzwerkbedingungen Netzwerkleistungsschwellenwerte nicht erfüllen oder überschreiten.

7. Verfahren zum Verwalten des Streamings von Fahrzeugdaten mit einem oder mehreren Fahrzeugen (110), wobei das Verfahren Folgendes umfasst:
Erhalten einer Streaming-Datenanforderung, um aus einem ausgewählten Fahrzeug zu streamen, durch einen Fahrzeugdatenzugriffsdienst (112), der einem Netzwerkdienstanbieter (120) zugeordnet ist, wobei die Streaming-Datenanforderung angeforderte Fahrzeuginformationen enthält;
Identifizieren der angeforderten Fahrzeuginformationen von dem einen oder den mehreren Fahrzeugen (110) und von Streaming-Datenparametern anhand der erhaltenen Streaming-Datenanforderung durch den Fahrzeugdatenzugriffsdienst (112), wobei die Streaming-Datenparameter Spezifikationsregeln zum Fahrzeugauswählen umfassen;
Erfassen von Netzwerkleistungsinformationen, um einen Zeitpunkt zum Starten einer Kommunikation mit dem Fahrzeug (110) zu bestimmen, durch den Fahrzeugdatenzugriffsdienst (112);
als Reaktion auf das Bestimmen des Zeitpunkts zum Starten der Kommunikation, Herstellen eines drahtlosen Kommunikationspfads mit dem Fahrzeug (110) durch den Fahrzeugdatenzugriffsdienst (112), wobei der drahtlose Kommunikationspfad unter Verwendung eines Benutzer-Datagramm-Protokolls, UDP, hergestellt wird, wobei das Herstellen eines drahtlosen Kommunikationspfads Folgendes umfasst:
Übertragen einer UDP-basierten Streaming-Datenanforderung basierend auf den Streaming-Datenparametern an das eine oder die mehreren Fahrzeuge (110) durch den Fahrzeugdatenzugriffsdienst (112),
Empfangen der UDP-basierten Streaming-Datenanforderung durch Mikrocontroller, MCUs (210), die in dem einen oder den mehreren Fahrzeugen (110) enthalten sind, wobei eine MCU (210) eines Fahrzeugs (110) mit einem Gateway (208) des Fahrzeugs (110) in Kommunikation steht, wobei die MCU (210) und das Gateway (208) eine UDP-basierte Anwendungsprogrammierschnittstelle, API, definieren, wobei die UDP-basierte Streaming-Datenanforderung dazu konfiguriert ist, über die MCU (210) umgewandelt zu werden, um einen anderen Befehl zu erzeugen, der für das Gateway (208) verwendet werden kann, um die der Anforderung entsprechenden Fahrzeugdaten zu suchen,
wobei die UDP-basierte Streaming-Datenanforderung ein Stream von responsiven Fahrzeugdaten ist, die der erhaltenen Streaming-Datenanforderung entsprechen, und wobei die API das Bearbeiten der Streaming-Datenanforderung ermöglicht, ohne dass der Stream neu gestartet werden muss; und
Senden des Streams von responsiven Fahrzeugdaten an den Fahrzeugzugriffsdienst (112) durch das eine oder die mehreren Fahrzeuge (110); und
Empfangen des Streams von responsiven Fahrzeugdaten von dem einen oder den mehreren Fahrzeugen (110) durch den Fahrzeugdatenzugriffsdienst (112); und
als Reaktion auf das Empfangen des Streams von responsiven Fahrzeugdaten, Analysieren des Streams von responsiven Fahrzeugdaten durch den Fahrzeugdatenzugriffsdienst (112).

8. Verfahren nach Anspruch 7, wobei die Streaming-Datenparameter ferner Parameter bezüglich des Verarbeitens der Streaming-Datenanforderung und einen spezifizierten Zeitraum, während dem das Fahrzeug (110) bei einem Netzwerkdienstanbieter (120) behalten wird, umfassen.

## Revendications

1. Système de gestion du flux de données de véhicule comprenant un fournisseur de services réseau (120) et un ou plusieurs véhicules (110), le fournisseur de services réseau (120) comprenant :
un ou plusieurs processeurs informatiques et mémoires associés à un service d'accès aux données de véhicule (112), ledit service d'accès aux données de véhicule (112) étant configuré pour :
obtenir une requête de flux de données, dans laquelle requête de flux de données comprend une information de véhicule (110) demandée ;
identifier, à partir de la requête de flux de données obtenue, l'information de véhicule (110) demandée parmi le ou les véhicules (110) et des paramètres de flux de données, lesdits paramètres de flux de données comprenant des règles de spécification pour la sélection d'information de véhicule (110) ;
collecter une information sur la performance du réseau afin de déterminer un moment d'initiation d'une communication avec le véhicule (110) ;
en réponse à la détermination du moment d'initiation de la communication avec un véhicule (110) associé à l'information de véhicule (110) demandée identifiée, établir un chemin de communication sans fil avec le véhicule (110), dans lequel chemin de communication sans fil est établi à l'aide d'un protocole de datagramme utilisateur (UDP),
l'établissement d'un chemin de communication sans fil comprenant :
la transmission d'une requête de flux de données basée sur UDP, sur la base des paramètres de flux de données, à des microcontrôleurs (MCU) (210) inclus dans le ou les véhicules (110), un MCU (210) d'un véhicule (110) étant en communication avec une passerelle (208) du véhicule (110), le MCU (210) et la passerelle (208) définissant une interface de programmation d'application (API) basée sur UDP, la requête de flux de données basée sur UDP étant configurée pour être convertie via le MCU (210) afin de générer une autre commande à utiliser par la passerelle (208) pour rechercher les données du véhicule (110) correspondant à la requête,
dans laquelle requête de flux de données basée sur UDP est un flux de données de véhicule (110) en réponse correspondant à la requête de flux de données obtenue, et dans laquelle API permet la modification de la requête de flux de données sans avoir à redémarrer le flux ; et
la réception, depuis le véhicule (110), du flux de données de véhicule (110) en réponse ; et en réponse à la réception du flux de données de véhicule (110) en réponse, l'analyse du flux de données de véhicule (110) en réponse.

2. Système selon la revendication 1, dans lequel les paramètres de flux de données comprennent en outre des paramètres relatifs au traitement de la requête de flux de données, et une durée spécifiée du véhicule (110) maintenu dans le fournisseur de services réseau (120) et dans lequel le service d'accès aux données de véhicule (112) est configuré pour inclure un ou plusieurs modèles des paramètres de flux de données.

3. Système selon la revendication 1, dans lequel l'information sur la performance du réseau comprend une bande passante réseau disponible, des mesures de latence et des taux d'erreur de transmission.

4. Système selon la revendication 1, dans lequel la transmission basée sur UDP est fondée sur un protocole Internet, dans lequel la transmission basée sur UDP ne nécessite pas de service de vérification d'erreur ni de service de récupération, et dans lequel le service d'accès aux données de véhicule (112) est en outre configuré pour mettre à jour une condition du réseau sur la base d'attributs du réseau générés à partir de la transmission basée sur UDP.

5. Système selon la revendication 1, dans lequel l'analyse du flux de données en réponse comprend la détermination de paramètres de fonctionnement du véhicule (110) demandés et d'un état environnemental du véhicule (110) détecté par des capteurs (202), lesdits capteurs (202) comprenant au moins un système de vision.

6. Système selon la revendication 1, dans lequel le service d'accès aux données de véhicule (112) mesure la requête de flux de données pour des données à large bande passante lorsque les conditions du réseau de communication ne satisfont pas ou ne dépassent pas les seuils de performance du réseau.

7. Procédé de gestion du flux de données de véhicule (110) avec un ou plusieurs véhicules (110), le procédé comprenant :
L'obtention, par un service d'accès aux données de véhicule (112) associé à un fournisseur de services réseau (120), d'une requête de flux de données à diffuser depuis un véhicule sélectionné, dans laquelle requête de flux de données comprend une information de véhicule (110) demandée ;
l'identification, à partir de la requête de flux de données obtenue, par le service d'accès aux données de véhicule (112), de l'information de véhicule (110) demandée parmi le ou les véhicules (110) et des paramètres de flux de données, lesdits paramètres de flux de données comprenant des règles de spécification pour la sélection du véhicule (110) ;
la collecte d'une information sur la performance du réseau, par le service d'accès aux données de véhicule (112), afin de déterminer un moment d'initiation d'une communication avec le véhicule (110) ;
en réponse à la détermination du moment d'initiation de la communication, l'établissement d'un chemin de communication sans fil avec le véhicule (110), par le service d'accès aux données de véhicule (112), dans lequel chemin de communication sans fil est établi à l'aide d'un protocole de datagramme utilisateur (UDP), l'établissement d'un chemin de communication sans fil comprenant :
la transmission, par le ou les services d'accès aux données de véhicule (112), d'une requête de flux de données basée sur UDP sur la base des paramètres de flux de données au ou aux véhicules (110),
la réception de la requête de flux de données basée sur UDP par des microcontrôleurs (MCU) (210) inclus dans le ou les véhicules (110), un MCU (210) d'un véhicule (110) étant en communication avec une passerelle (208) du véhicule (110), le MCU (210) et la passerelle (208) définissant une interface de programmation d'application (API) basée sur UDP, la requête de flux de données basée sur UDP étant configurée pour être convertie via le MCU (210) afin de générer une autre commande à utiliser par la passerelle (208) pour rechercher les données du véhicule (110) correspondant à la requête,
dans laquelle requête de flux de données basée sur UDP est un flux de données de véhicule (110) en réponse correspondant à la requête de flux de données obtenue et dans laquelle API permet la modification de la requête de flux de données sans avoir à redémarrer le flux ; et
l'envoi, par le ou les véhicules (110), du flux de données de véhicule (110) en réponse au service d'accès aux données de véhicule (112) ; et
la réception, par le service d'accès aux données de véhicule (112), depuis le ou les véhicules (110), du flux de données de véhicule (110) en réponse ; et
en réponse à la réception du flux de données de véhicule (110) en réponse, l'analyse, par le service d'accès aux données de véhicule (112), du flux de données de véhicule (110) en réponse.

8. Procédé selon l'une quelconque des revendications 7, dans lequel les paramètres de flux de données comprennent en outre des paramètres relatifs au traitement de la requête de flux de données, et une durée spécifiée du véhicule (110) maintenu dans un fournisseur de services réseau (120).
